Europäisches Patentamt

European Patent Office

Office européen des brevets

(11) Publication number: **0 058 559**
**B1**

(12) **EUROPEAN PATENT SPECIFICATION**

(45) Date of publication of patent specification: **31.05.89**　　(51) Int. Cl.⁴: **F 16 K 11/04**

(21) Application number: **82300769.5**

(22) Date of filing: **16.02.82**

(54) Improved valve.

(30) Priority: **17.02.81 US 234715**

(43) Date of publication of application:
**25.08.82 Bulletin 82/34**

(45) Publication of the grant of the patent:
**31.05.89 Bulletin 89/22**

(84) Designated Contracting States:
**AT BE CH DE FR GB IT LI LU NL SE**

(56) References cited:
**DE-A-2 311 408**
**US-A-3 884 266**

**Taco J. Viersma, Studies in Mechanical
Engineering, 1, Elsevier Scientific Publishing
Co. Amsterdam, 1980, "Analysis, Synthesis and
Design of Hydraulic Servosystems and
Pipelines", pages 1-5 and figure 1.1**

(73) Proprietor: **THE REISS ENGINEERING
COMPANY LIMITED
2 Dalston Gardens
Stanmore Middlesex (GB)**

(72) Inventor: **Bartlett, John Michael
Westfield Farm Weston on the Green
Nr. Bicester Oxon (GB)**
Inventor: **Henderson, James
53 Deansway Exhall
Coventry West Midlands (GB)**

(74) Representative: **Wilson, Nicholas Martin et al
WITHERS & ROGERS 4 Dyer's Buildings Holborn
London EC1N 2JT (GB)**

Courier Press, Leamington Spa, England.

## Description

This invention relates to a valve for diverting fluid from one fluid path to another.

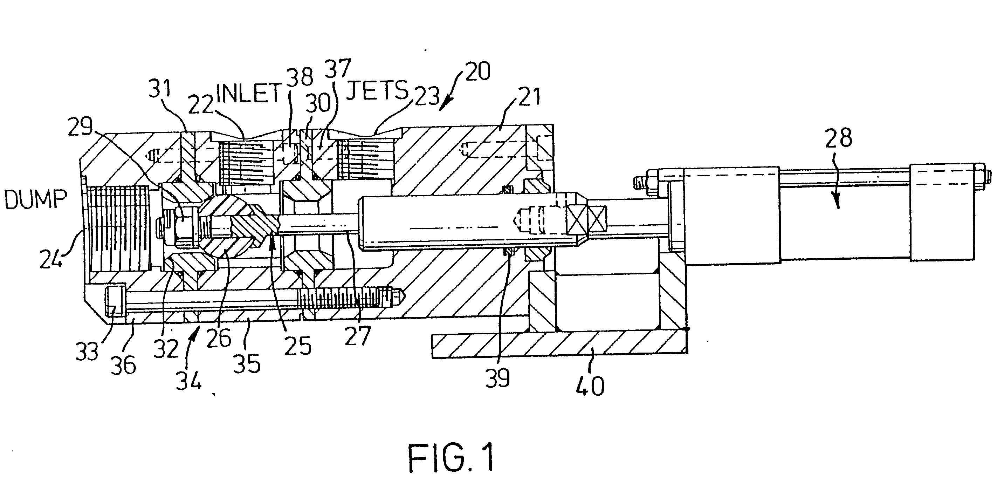

In "Analysis, Synthesis and Design of Hydraulic Servosystems and Pipelines" 1980 edition by Taco Viersma in Figure 1.1 and at pages 1 to 5 there is disclosed an asymmetric motor including a three-way valve in which the position of the valve member is used to cause displacements by varying the size of outlet openings. However, as the valve is not designed to close one or other of the outlets it is not designed to accommodate the loads imposed by sealing against high pressure liquids.

US—A—3884266 discloses a directional control valve which is a two position, four way pneumatic directional valve and the feed is between two seals.

However, the design of the valve is such that it must exhaust to atmosphere during each cycle which is not suitable for liquids. Moreover, the pressures involved with high pressure liquids would lift the balls from their seating and therefore make it unsuitable for high pressure use.

According to the present invention there is provided a diverter valve comprising a body, a hollow chamber within said body, first, second and third inlet/outlets, a first valve seat disposed between the first and second inlet/outlets, a second valve seat disposed between the second and third inlet/outlets, and a valve member movable within the hollow chamber between the first and second valve seats, characterised in that at least two of the inlet/outlets are always in fluid communication with one another, in that each of the first and second valve seats comprises a discrete member having first and second sealing seats, and in that the valve seats are movably retained in their respective positions, whereby the valve seats may be reversed.

Preferably the valve member is movable between seating positions on the first and second valve seats to direct the flow to or from the second inlet/outlet to or from the third inlet/outlet and first inlet/outlet respectively. Advantageously the first and second sealing seats are of rigid material and have frustoconical seating surfaces, while the valve member may be a ball valve of resilient material.

The invention also includes a diverter valve comprising a hollow body defining an elongate chamber, an inlet opening into said elongate chamber and disposed between first and second outlets from the elongate chamber, a valve member within the hollow body and means for moving the valve member within the elongate chamber characterised in that the valve is suitable for use with high pressure liquids and:

a first conical valve seat is disposed between the inlet and the first outlet, a second conical valve seat is provided between the inlet and the second outlet, the body includes a removable head having inner and outer portions, the first and second valve seats being releasably retained between respectively the inner and outer portions of the head and the inner portion of the head and the body whereby the valve seats may be removed and reversed;

the valve member is a ball valve member, and the means for moving the ball valve member is a double-acting actuator for moving the ball valve member axially within the elongate chamber from the first valve seat to the second valve seat to divert flow from the inlet to either the first or second outlet, the inlet always being in fluid communication with one of said outlets.

The invention will now be described by way of example with reference to the accompanying drawings in which:

Figure 1 is a longitudinal cross-section of a first, preferred, embodiment of a high pressure/low pressure diverter valve;

Figure 2 is a longitudinal cross-section of a second embodiment of a high pressure/low pressure valve in accordance with the invention.

In the drawings of the first embodiment a diverter valve 20 is illustrated which enables the smooth transition of low pressure to high pressure supply. This valve enables diversion to take place without there being a position in which both outlets are closed off as the valve switches over.

As shown in Figure 1, valve 20 has a hollow body 21 with a low pressure inlet 22, a high pressure outlet 23 and a low pressure outlet 24 to a storage reservoir (not shown) or waste. Located within the hollow body 21 is a valve member 25 which comprises a nylon ball valve 26 replaceably situated on the end of a balanced actuator rod 27 of a double-acting hydraulic or pneumatic piston and cylinder assembly 28 by means of a locking nut 29.

The ball valve 26 seats on either of two annular sealing cones 30 and 31. The sealing cones 30 and 31 are provided with sealing chamfers 32 on both sides so that they may be reversed after wear. Reversal of the sealing cones 30 and 31 is achieved by releasing locking bolts 33 (only one shown) which permit separation of a two part valve head 34 of the hollow body 21 comprising inner and outer portions 35 and 36 respectively. The sealing cone 30 is secured to the body 21 by screws 37 and the sealing cone 31 is secured to the outer portion 36 by screws 38. In order to provide a seal between the actuator 27 and the hollow body 21 a replaceable O-ring seal 39 is provided as shown. The whole valve is supported on a frame 40 which may be mounted as desired.

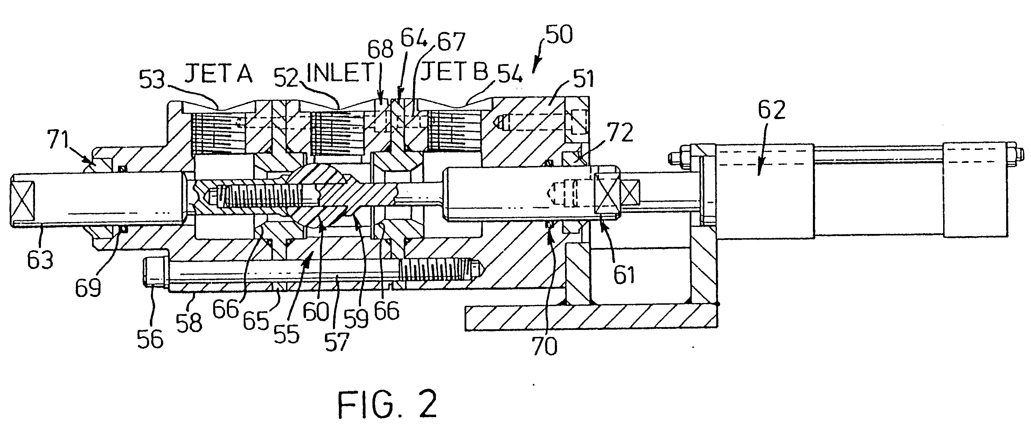

The arrangement shown in Figure 2 is similar to that shown in Figure 1 except that the diverter valve 50 is specially designed to alternate between two high pressure outlets. The valve 50 comprises a hollow body 51 having an inlet 52 and two high pressure outlets 53 and 54. As in the second embodiment the hollow body 51 has a removable head 55 attached by removable nuts 56 (only one shown) and comprising inner and outer portions 57 and 58. Disposed within the hollow body 51 is a valve member 59 comprising a nylon ball valve 60 releasably retained on the end of a balanced actuator rod 61 of a double-acting hydraulic or pneumatic piston and cylinder assembly 62 by a balanced guide 63. The ball valve 60 is movable between two seatings on reversable sealing cones 64, 65 which have chamfers 66 on both sides. The sealing cones 64, 65 are releasably connected to the body 51 and the outer portion 58 respectively by screws 67, 68. In order to provide a seal between an enlarged portion of the balanced guide 63 and the outer head portion 58, and an enlarged portion of the balanced actuator rod 61 and the hollow body 51, respective inner O-rings 69, 70 and outer seal 71, 72 are provided.

In high pressure water systems the diverter valves of the present invention are of particular advantage since the volume from a pump (not shown) is always constant and, if both outlets were closed off, if only for a fraction of a second, then the pump could be pumping into a closed circuit and the high pressure of water would cause the pump relief valve to open and dump water. Moreover, the transition from high pressure to low pressure (Figure 1) or high pressure to high pressure is smooth.

The design of valve has additional advantages over known valves, for example in Figure 1 only a single 'live' O-ring seal is required in the whole valve; in Figure 2 there are only two such seals. Because the valve is operated by a double-acting actuator no return springs are required and seating on both sealing cones is positive.

The valves of the present invention are designed to deal with the transfer of fluid pressures between 0—68.95 bar (0—10,000 psi) and are pressure tested up to 206.85 bar (30,000 psi). The flow rate may suitably be 159.11 litres (35 gallons) per minute.

Although the diverter valves are primarily designed for the transfer of high pressure fluids they may be used for low pressure transfer. However, suitably they are used in the transfer of water in high pressure washing apparatus. Alternatively, where two different fluids or fluids at different pressures are desired from a single outlet, the valve may be used to switch between two inlets.

If desired the valve of the present invention may be used as an on/off valve by closing off one of the two outlets.

## Claims

1. A diverter valve comprising a body (21; 51), a hollow chamber within said body, first (23; 54), second (24; 53) and third (22; 52) inlet/outlets, a first valve seat (30; 64) disposed between the first (23; 54) and second (24; 53) inlet/outlets, a second valve seat (31; 65) disposed between the second (24; 53) and third (22; 52) inlet/outlets, and a valve member (25; 59) movable within the hollow chamber between the first and second valve seats, characterised in that at least two of the inlet/outlets are always in fluid communication with one another, in that each of the first (30; 64) and second (31; 65) valve seats comprises a discrete member having first and second sealing seats, and in that the valve seats are movably retained in their respective positions, whereby the valve seats may be reversed.

2. A diverter valve according to Claim 1, wherein the valve member (25; 59) is movable between seating positions on the first (30; 64) and second (31; 65) valve seats to direct the flow to or from the second inlet/outlet (24; 53) to or from the third inlet/outlet (22; 52) and first inlet/outlet (23; 54) respectively.

3. A diverter valve according to Claim 1 or Claim 2, wherein the first and second sealing seats are of rigid material and have frusto-conical seating surfaces, and wherein the valve member (25; 59) is cooperable with the first (30; 64) and second (31; 65) valve seats and comprises a ball valve of resilient material (26; 60).

4. A diverter valve according to any preceding Claim, wherein the first (30; 64) and second (31; 65) valve seats comprise cylindrical members each end of which are chamfered to provide two frusto-conical sealing seats.

5. A diverter valve according to any preceding Claim, wherein the body (21; 51) includes a removable head (34; 55) having inner and outer portions (35; 57; 36; 58), the first (30; 64) and second (31; 65) valve seats being releasably retained between respectively the inner (35; 57) and outer (36; 58) portions of the head (34; 55) and the inner portion (35; 57) of the head and the body (21; 51) whereby the valve seats may be removed and reversed.

6. A diverter valve according to Claim 3, wherein the ball valve (26; 60) is secured to the actuating member of a double-acting actuator (28; 62).

7. A diverter valve according to Claim 6, wherein the ball valve (26; 60) is a nylon ball valve member releasably secured to the actuating member.

8. A diverter valve according to any preceding Claim, wherein the valve member (25; 59) is movable by means of a double-acting hydraulic piston and cylinder assembly (28; 62), the ball valve (26; 60) being releasably secured to an actuating rod (27; 61) movable with said piston.

9. A diverter valve according to any preceding Claim, wherein the first inlet/outlet (23; 53) is an outlet, the second inlet/outlet (24; 53) is an inlet from pump means, and the third inlet/outlet (22; 52) is an outlet.

10. A diverter valve comprising a hollow body (21; 51) defining an elongate chamber, an inlet (24; 53) opening into said elongate chamber and disposed between first (23; 54) and second (22; 52) outlets from the elongate chamber, a valve member (25; 59) within the hollow body (21; 51) and means (28; 62) for moving the valve member within the elongate chamber characterised in that the valve is suitable for use with high pressure liquids and:

a first conical valve seat (30; 64) is disposed between the inlet (24; 53) and the first outlet (23; 54) a second conical valve seat (31; 65) is provided between the inlet (24; 53) and the second outlet (22; 52), the body (21; 51) includes a removable head (34; 55) having inner and outer portions (35; 57; 36; 58), the first (30; 64) and the second (31; 65) valve seats being releasably retained between respectively the inner (35; 57) and the outer (36; 58) portions of the head (34; 55) and the inner portion (35; 57) of the head and the body (21; 51) whereby the valve seats may be removed and reversed; the valve member (25; 59) is a ball valve member (26; 60) the means (28; 62) for moving the ball valve member (26; 60) is a double-acting actuator for moving the ball valve member axially within the elongate chamber from the first valve seat (30; 64) to the second valve seat (31; 65) to divert flow from the inlet to either the first (23; 54) or second (22; 52) outlet, the inlet (24; 53) always being in fluid communication with one of said outlets.

**Patentansprüche**

1. Umlenkventil, das einen Körper (21; 51), eine hohle Kammer in dem Körper, erste (23; 54), zweite (24; 53) und dritte (22; 52) Einlaß/Auslässe, einen ersten Ventilsitz (30; 64), der zwischen den ersten (23; 54) und den zweiten (24; 53) Einlaß/Auslässen angeordnet ist, einen zweiten Ventilsitz (31; 65), der zwischen den zweiten (24; 53) und dritten (22; 52) Einlaß/Auslässen angeordnet ist, und ein Ventilelement (25; 29) aufweist, das in der hohlen Kammer zwischen dem ersten und dem zweiten Ventilsitz beweglich ist, dadurch gekennzeichnet, daß wenigstens zwei der Einlaß/Auslässe immer in Fluidverbindung miteinander sind, daß jeder erste (30; 64) und zweite (31; 65) Ventilsitz ein gesondertes Element aufweist, das erste und zweite Dichtungssitze hat, und daß die Ventilsitze in ihren entsprechenden Positionen beweglich festgehalten sind, wobei die Ventilsitze umgekehrt werden können.

2. Umlenkventil nach Anspruch 1, bei dem das Ventilelement (25; 59) zwischen Sitzpositionen auf dem ersten (30; 64) und dem zweiten (31; 65) Ventilsitz beweglich ist, um die Strömung zu dem zweiten Einlaß/Auslaß (24; 53) oder von diesem wegzulenken, zu dem dritten Einlaß/Auslaß (22; 52) und dem ersten Einlaß/Auslaß (23; 54) jeweils zu lenken oder von diesen wegzulenken.

3. Umlenkventil nach Anspruch 1 oder Anspruch 2, bei dem die ersten und zweiten Dichtungssitze aus starrem Material bestehen und kegelstumpfförmige Sitzflächen haben, und bei dem das Ventilelement (25; 59) mit den ersten (30; 64) und zweiten (31; 65) Ventilsitzen zusammenarbeiten kann und eine Ventilkugel (26; 60) aus federnd nachgiebigem Material aufweist.

4. Umlenkventil nach einem der vorangehenden Ansprüche, bei dem die ersten (30; 64) und zweiten (31; 65) Ventilsitze zylindrische Teile aufweisen, deren jeweilige Enden verjüngt sind, um zwei kegelstumpfförmige Dichtungssitze zu bilden.

5. Umlenkventil nach einem der vorangehenden Ansprüche, bei dem der Körper (21; 51) einen abnehmbaren Kopf (34; 55) enthält, der innere und äußere Abschnitte (35; 57; 36; 58) hat, wobei die ersten (30; 64) und zweiten (31; 65) Ventilsitze lösbar zwischen den jeweiligen inneren (35; 57) und äußeren (36; 58) Abschnitten des Kopfes (34; 55) und dem inneren Abschnitt (35; 57) des Kopfes und dem Körper (21; 51) festgehalten sind, und wobei die Ventilsitze entfernt und umgekehrt werden können.

6. Umlenkventil nach Anspruch 3, bei dem die Ventilkugel (26; 60) fest mit dem Betätigungselement einer doppelt wirkenden Betätigungseinrichtung (28; 62) verbunden ist.

7. Umlenkventil nach Anspruch 6, bei dem die Ventilkugel (26; 60) ein Nylonventilkugelelement ist, das lösbar fest mit dem Betätigungselement verbunden ist.

8. Umlenkventil nach einem der vorangehenden Ansprüche, bei dem das Ventilelement (25; 59) mit Hilfe einer doppelt wirkenden hydraulischen Kolben- und Zylinderanordnung (28; 62) bewegbar ist, wobei die Ventilkugel (26; 60) lösbar fest mit einer Betätigungsstange (27, 61) verbunden ist, die mit dem Kolben bewegbar ist.

9. Umlenkventil nach einem der vorangehenden Ansprüche, bei dem der erste Einlaß/Auslaß (23; 53) ein Auslaß, der zweite Einlaß/Auslaß (24; 53) ein Einlaß von einer Pumpeinrichtung und der dritte Einlaß/Auslaß (22; 52) ein Auslaß ist.

10. Umlenkventil, das einen hohlen Körper (21; 51), der eine längliche Kammer bildet, einen Einlaß (42; 53), der in die längliche Kammer mündet und zwischen dem ersten (23; 54) und dem zweiten (22; 52) Auslaß von der länglichen Kammer angeordnet ist, ein Ventilelement (25; 59) in dem hohlen Körper (21; 51) und Einrichtungen (28; 62) zum Bewegen des Ventilelements in der länglichen Kammer aufweist, dadurch gekennzeichnet, daß das Ventil zur Verwendung in Verbindung mit Hochdruckflüssigkeiten geeignet ist, und:

ein erster konischer Ventilsitz (30; 64) zwischen dem Einlaß (24; 53) und dem ersten Auslaß (23; 54) angeordnet ist, ein zweiter konischer Ventilsitz (31; 65) zwischen dem Einlaß (24; 53) und dem zweiten Auslaß (22; 52) vorgesehen ist, der Körper (21; 51) einen abnehmbaren Kopf (34; 55) enthält, der innere und äußere Abschnitte (35; 57; 36; 58) hat, der erste (30; 64) und der zweite (31; 65) Ventilsitz lösbar zwischen jeweils dem inneren (35; 57) und dem äußeren (36; 58) Abschnitt des Kopfs (34; 55) und dem inneren Abschnitt (35; 57) des Kopfs und dem Körper (21; 51) festgehalten ist, wobei die Ventilsitze entfernt und umgekehrt werden können,

das Ventilelement (25; 59) ein Ventilkugelelement (26; 60) ist, die Einrichtung (28; 62) zum Bewegen des Ventilkugelelements (26; 60) eine doppelt wirkende Betätigungseinrichtung zum Bewegen des Ventilkugelelements in axialer Richtung in der länglichen Kammer von dem ersten Ventilsitz (30; 64) zu dem zweiten Ventilsitz (31; 65) ist, um die Strömung von dem Einlaß entweder zum ersten (23; 54) oder dem zweiten (22; 52) Auslaß umzulenken, und der Einlaß (24; 53) immer in Fluidverbindung mit einem der Auslässe ist.

**Revendications**

1. Soupape de dérivation comprenant un corps (21; 51), une chambre creuse à l'intérieur dudit corps, une première (23; 54), une deuxième (24; 53) et une troisième (22; 52) entrée/sorties, un premier siège de soupape (30; 64) disposé entre les première (23; 54) et deuxième (24; 53) entrée/sorties, un deuxième siège de soupape (31; 65) disposé entre les deuxième (24; 53) et troisième (22; 52) entrée/sorties, et un organe obturateur (25; 59) mobile à l'intérieur de la chambre creuse entre les premier et deuxième sièges de soupape, caractérisée en ce qu'au moins deux des entrée/sorties sont toujours en communication de fluide l'une avec l'autre, en ce que chacun des premier (30; 64) et deuxième (31; 65) sièges de soupape comprend une pièce distincte présentant un premier et un deuxième sièges d'étanchéité, et en ce que les sièges de soupape sont retenus de façon amovible dans leurs positions respectives, de sorte que les sièges de soupape peuvent être inversés.

2. Soupape de dérivation suivant la revendication 1, dans laquelle l'organe obturateur (25; 59) est mobile entre des positions d'assise sur les premier (30; 64) et deuxième (31; 65) sièges de soupape, pour diriger l'écoulement vers ou en provenance de la deuxième entrée/sortie (24; 53) vers ou en provenance de la troisième entrée/sortie (22; 52) et de la première entrée/sortie (23; 54) respectivement.

3. Soupape de dérivation suivant la revendication 1 ou la revendication 2, dans laquelle les premier et deuxième sièges d'étanchéité sont en matière rigide et présentent des surfaces d'assise tronconiques, et dans laquelle l'organe obturateur (25; 59) peut coopérer avec les premier (30; 64) et deuxième (31; 65) sièges de soupape et comprend un obturateur à boule en matière élastique (26; 60).

4. Soupape de dérivation suivant l'une quelconque des revendications précédentes, dans laquelle les premier (30; 64) et deuxième (31; 65) sièges de soupape comprennent des pièces cylindriques dont chaque extrémité est chanfreinée pour engendrer deux sièges d'étanchéité tronconiques.

5. Soupape de dérivation suivant l'une quelconque des revendications précédentes, dans laquelle le corps (21; 51) comprend une tête démontable (34; 55) comportant une partie intérieure et une partie extérieure (35; 57; 36; 58), les premier (30; 64) et deuxième (31; 65) sièges de soupape étant retenus de façon libérable entre respectivement les parties intérieure (35; 57) et extérieure (36; 58) de la tête (34; 55), et la partie intérieure (35; 57) de la tête et le corps (21; 51), de sorte que les sièges de soupape peuvent être démontés et inversés.

6. Soupape de dérivation suivant la revendication 3, dans laquelle l'obturateur à boule (26; 60) est fixée à l'organe de manoeuvre d'un actionneur à double effet (28; 62).

7. Soupape de dérivation suivant la revendication 6, dans laquelle l'obturateur à boule (26; 60) est un obturateur à boule en nylon fixé de façon démontable à l'organe de manoeuvre.

8. Soupape de dérivation suivant l'une quelconque des revendications précédentes, dans laquelle l'organe obturateur (25; 59) est déplaçable au moyen d'un groupe à piston et cylindre hydraulique à double effet (28; 52), l'obturateur à boule (26; 60) étant fixé de façon démontable à une tige de manoeuvre (27; 61) mobile avec le dit piston.

9. Soupape de dérivation suivant l'une quelconque des revendications précédentes, dans laquelle la première entrée/sortie (23; 53) est une sortie, la deuxième entrée/sortie (24; 53) est une entrée venant de moyens de pompage, et la troisième entrée/sortie (22; 52) est une sortie.

10. Soupape de dérivation comprenant un corps creux (21; 51) définissant une chambre allongée, une entrée (24, 53) débouchant dans ladite chambre allongée et disposée entre les première (23; 54) et deuxième (22; 52) sorties de la chambre allongée, un organe obturateur (25; 59) placé à l'intérieur du corps creux (21; 51), et des moyens (28; 62) pour déplacer l'organe obturateur à l'intérieur de la chambre allongée, caractérisée en ce que la soupape convient pour l'utilisation avec des liquides à haute pression et:

un premier siège de soupape conique (30; 64) est disposé entre l'entrée (24; 53) et la première sortie (23; 54), un deuxième siège de soupape conique (31; 65) est prévu entre l'entrée (24; 53) et la deuxième sortie (22; 52), le corps (21; 51) comprend une tête démontable (34; 55) comportant une partie intérieure et une partie extérieure (35; 57; 36; 58), les premier (30; 64) et deuxième (31; 65) sièges de soupape étant retenus de façon libérable entre respectivement les parties intérieure (35; 57) et extérieure (36; 58) de la tête (34; 55), et la partie intérieure (35; 57) de la tête et le corps (21; 51), de sorte que les sièges de soupape peuvent être démontés et inversés;

l'organe obturateur (25; 59) est un obturateur à boule (26; 60); et

les moyens (28; 62) de déplacement de l'obturateur à boule (26; 60) sont constitués d'un actionneur à double effet pour déplacer l'obturateur à boule axialement à l'intérieur de la chambre allongée, du premier siège de soupape (30; 64) au deuxième siège de soupape (31; 65), de manière à aiguiller la circulation de l'entrée vers la première (23; 54) ou la deuxième (22; 52) sortie, l'entrée (24; 53) étant toujours en communication de fluide avec l'une desdites sorties.

FIG.1

EP 0 058 559 B1

FIG. 2